# EUROPEAN PATENT SPECIFICATION

(11) **EP 2 837 586 B1**
(45) Date of publication and mention of the grant of the patent: **16.09.2015**
(21) Application number: 14161983.3
(22) Date of filing: 27.03.2014
(51) Int. Cl.: B65G 57/00, B65G 57/24, B65G 61/00

(54) **Palletising apparatus and method**
Vorrichtung und Verfahren zum Palettieren
Dispositif et procédé de palettisation

(30) Priority: 24.06.2013 IT PR20130051
(43) Date of publication of application: 18.02.2015
(73) Proprietor: Gea Procomac S.p.A., 43038 Sala Baganza (PR) (IT)
(72) Inventor: Bolzani, Dante, 43029 TRAVERSETOLO (PR) (IT)
(74) Representative: Gotra, Stefano

(56) References cited:
- WO-A1-2009/045390
- JP-A- S6 212 523
- JP-A- S60 112 502
- NL-C- 1 035 850
- US-B1- 6 658 816

## Description

The present invention relates to a palletising apparatus and method.

To simplify the transport operations of products packaged individually, systems are known that are adapted to group together and to package them in batches or in parcels that are easy to manoeuvre and such as to optimise the occupation of space. For example, in the beverage industry, bottles or cans containing beverages are grouped into parcels of six, twelve or twenty-four. Such parcels are then subjected to the action of complex systems adapted to handle, distribute and direct the parcels, forming layers and piling them onto pallets. As the layers are piled onto a pallet, an interlayer pad is periodically interposed, for example, made of cardboard.

Some solutions used up to now envisage:
- a store of pallets;
- a store of interlayer pads;
- a conveyor belt;
- a first column intended for the piling of layers;
- a second column intended for the insertion of the interlayer pads;
- complex movement organs.

For example, document NL1035850 describes a palletising apparatus having a column intended for piling, according to the preamble of claim 1.

Aside from the variations existing on the market, such solutions are, above all, affected by problems relating to their dimensions.

In the known solutions the presence of two columns responds to the requirement of reducing or eliminating the downtime for changing pallets. In fact, whenever a new pallet arrives it is necessary to lay down an initial interlayer pad before starting to load the layers. To prevent stopping the flow of layers, such solutions use a special column for the predisposition of the initial interlayer pad.

Furthermore, in the known solutions, the movement of interlayer pads and pallets is performed by anthropomorphic robots with various articulations, i.e. complex, sophisticated and expensive systems. Think, for example, about a system of articulated rotating arms which are required to sweep through substantial angles of rotation (even over 270°) and, at the same time, to maintain excellent rigidity characteristics.

A palletising method using a carriage on which an arm with a gripping organ is assembled is described in document WO2009/045390.

In this context, the technical task underpinning the present invention is to provide a palletising apparatus and method which obviates the drawbacks of the prior art as cited above.

In particular, an object of the present invention is to provide a more compact palletising apparatus, which is structurally simpler and more reliable than the solutions of the prior art.

Furthermore, an object of the present invention is to provide a palletising method that is quicker and simpler to implement than the methods of the prior art.

The technical task set and the objects specified are substantially attained by a palletising apparatus and method, comprising the technical characteristics as set out in one or more of the accompanying claims. Further characteristics and advantages of the present invention will more fully emerge from the non-limiting description of a preferred but not exclusive embodiment of a palletising apparatus and method, as illustrated in the accompanying drawings, in which:
- figures 1-8 illustrate the palletising apparatus, according to the present invention, in a plan view, during the same number of operating moments;

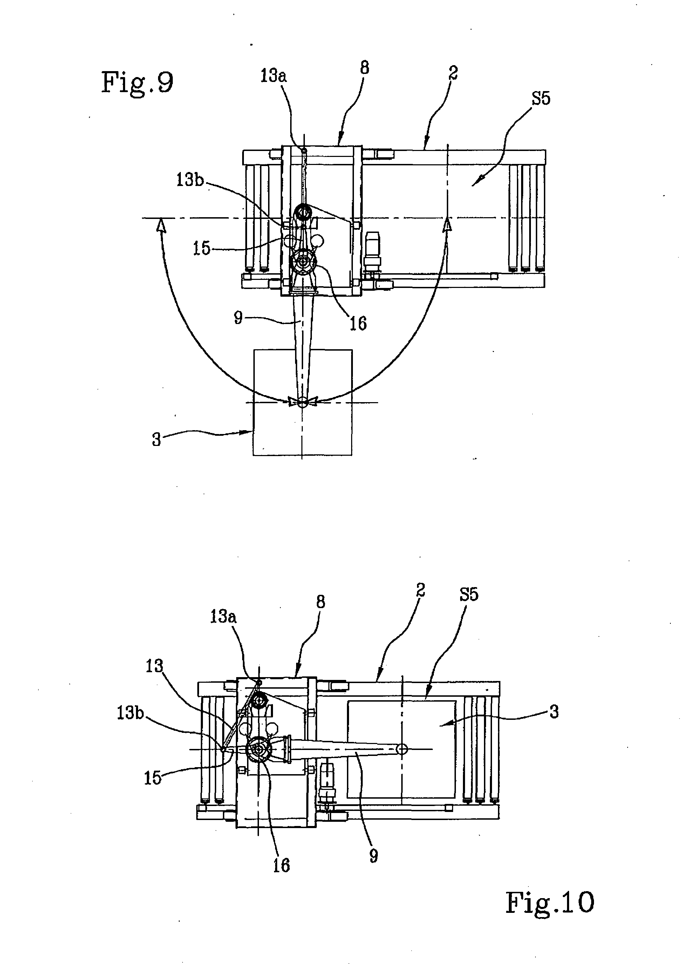

- figure 9 corresponds to an enlargement of the "carriage - pallet accumulation station - pallet predisposition station" portion in the same condition as figure 1;
- figure 10 corresponds to an enlargement of the "carriage - pallet predisposition station" portion in the same condition as figure 4;

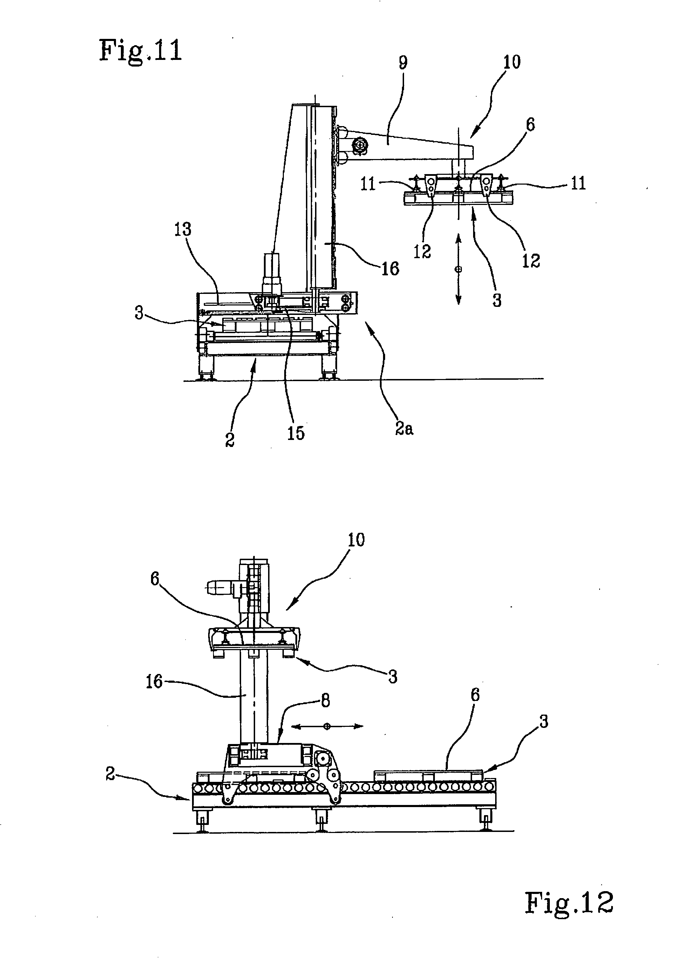

- figures 11 and 12 partially illustrate the palletising apparatus, according to the present invention, in a front view along the pre-established direction of the conveyor belt and in a side view of the conveyor belt, respectively.

With reference to the figures, 1 indicates a palletising apparatus comprising a conveyor belt 2 of pallets 3. The conveyor belt 2 extends according to a pre-established direction d, in particular, linear.

The palletising apparatus 1 comprises a palletising column 4 operatively active on a palletising station s1 situated along the conveyor belt 2 to pile layers of parcels onto a pallet 3.

The palletising column 4 is of the known type and will therefore not be described. In this context, it is sufficient to clarify that the palletising column 4 is provided with a gripping heat adapted to pick up the layers of parcels from a supply station s2 and to deposit them on the pallet 3 positioned in the palletising station s1.

The palletising apparatus 1 comprises an accumulation station s3 of interlayer pads 6 and an accumulation station s4 of pallets 3. Advantageously, the accumulation station s3 of interlayer pads 6 and the accumulation station s4 of pallets 3 are arranged on the same side 2a of the conveyor belt 2 and are adjacent to one another. In particular, the accumulation station s3 of the interlayer pads 6 and the accumulation station s4 of pallets 3 are alongside one another, parallel to the pre-established direction d of the conveyor belt 2.

The palletising apparatus 1 comprises movement means 8, 9, 10, 11, 12, 13 of the interlayer pads 6 and the pallets 3, which in turn comprise:
- a carriage 8 associated with the conveyor belt 2;
- a first arm 9 integral with the carriage 8 and rotatably assembled on the latter;
- a gripping organ 10 of the interlayer pads 6 and the pallets 3, which is supported by the first arm 9.

The carriage 8 is placed upstream of the palletising station s1. The expression "upstream" refers to the flow of pallets 3 on the conveyor belt 2 along the pre-established direction d, which goes from a predisposition station s5 of pallets 3 to the palletising station s1.

Originally, the carriage 8 is slidably mobile on the conveyor belt 2 between a first and a second configuration. In the first configuration, the carriage 8 is behind the palletising station s1 and is alongside the accumulation station s3 of interlayer pads 6. In the second configuration, the carriage 8 is at the predisposition station s5 of pallets 3 and is alongside the accumulation station s4 of pallets 3.

Originally, the first arm 9 sweeps through a maximum total angle of approximately 180° in turning between the palletising station s1, the accumulation station s3 of interlayer pads 6, the accumulation station s4 of pallets 3 and the predisposition station s5 of pallets.

Preferably, the gripping organ 10 of the interlayer pads 6 and the pallets 3 comprises one or more suction cups 11 adapted to adhere to the interlayer pads 6 and one or more grippers 12 adapted to hook onto the pallets 3.

Preferably, the movement means for moving the interlayer pads 6 and the pallets 3 also comprise a second arm 13, a third arm 15 and a column 16. The first arm 13 has a first fixed end 13a hinged to the carriage 8 and a second end 13b connected to the third arm 15. In this way, the second arm 13 acts as a slider and the third arm 15 as a crank, forming a slider-crank system. The slider-crank system is in itself known and will not be described further. The column 16 is interposed between the third arm 15 and the first arm 9.

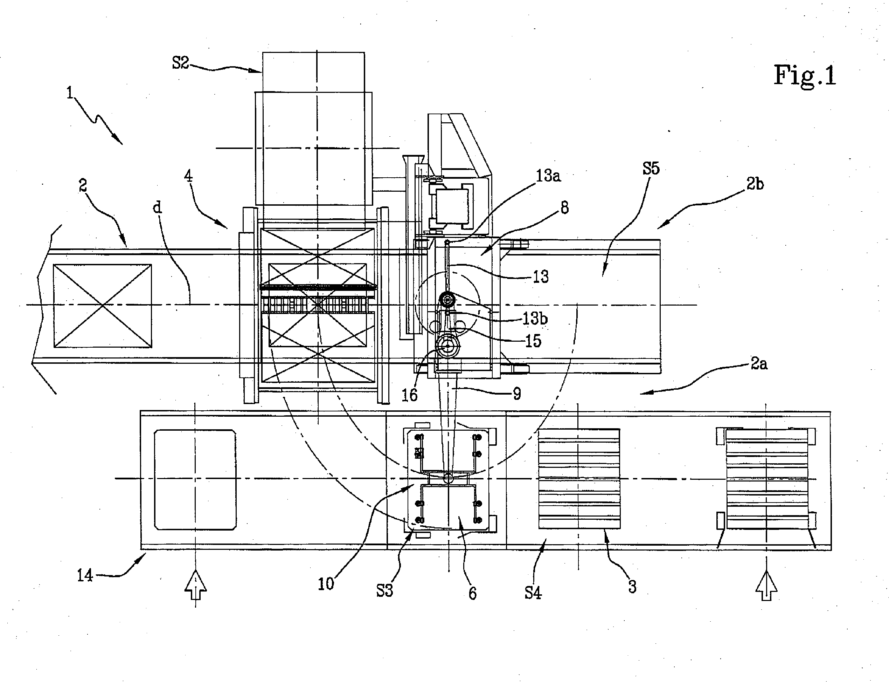

The palletising method according to the present invention is described below, with particular reference to figures 1-7.

Before starting a palletising cycle the following steps are envisaged:
- storing a plurality of interlayer pads 6 in the accumulation station s3 of interlayer pads 6 and forming a pile of interlayer pads 6;
- storing a plurality of pallets 3 in the accumulation station s4 of pallets 3 and forming a pile of pallets 3.

In particular, the interlayer pads 6 reach their accumulation station s3 with a pre-established orientation that is chosen according to the subsequent 90° rotations to which they will be subject (see later).

For example, in the embodiment described and illustrated herein the interlayer pads 6 and the pallets 3 are fed to the respective accumulation stations s3, s4 through a linear conveyor 14.

The pallets 3 advance on the conveyor belt 2 along the pre-established direction d.

Before being loaded with layers, at least one new pallet 3 is prepared at the predisposition station s5 of pallets 3. This preparation happens as follows. The carriage 8 is brought into the first configuration hence it is behind the palletising station s1 and is alongside the accumulation station s3 of interlayer pads 6. By keeping the carriage 8 in the first configuration, the first arm 9 is arranged so that the gripping organ 10 is positioned at the accumulation station s3 of interlayer pads 6. The gripping organ 10 is at a first pre-established height with respect to the ground or the floor on which the palletising apparatus 1 is resting. This first pre-established height is set automatically according to the height of the pile of interlayer pads 6.

In such situation, illustrated in figure 1, the first arm 9, the third arm 15 and the second arm 13 substantially lie on the same straight line defining a so-called "bottom dead centre" condition for the slider-crank system.

The top interlayer pad 6 of the pile is attracted by the suction cups 11 and picked up. By keeping the slider-crank system in the bottom dead centre condition, the carriage 8 is made to slide along the conveyor belt 2 until it reaches the second configuration hence it is at the predisposition station s5 of pallets 3 and is alongside the accumulation station s4 of pallets 3. The gripping organ 10 is hence at the accumulation station s4 of pallets 3. At this point the interlayer pad 6 is given up by the suction cups 11 and rested on the top pallet 3 of the pile of pallets 3.

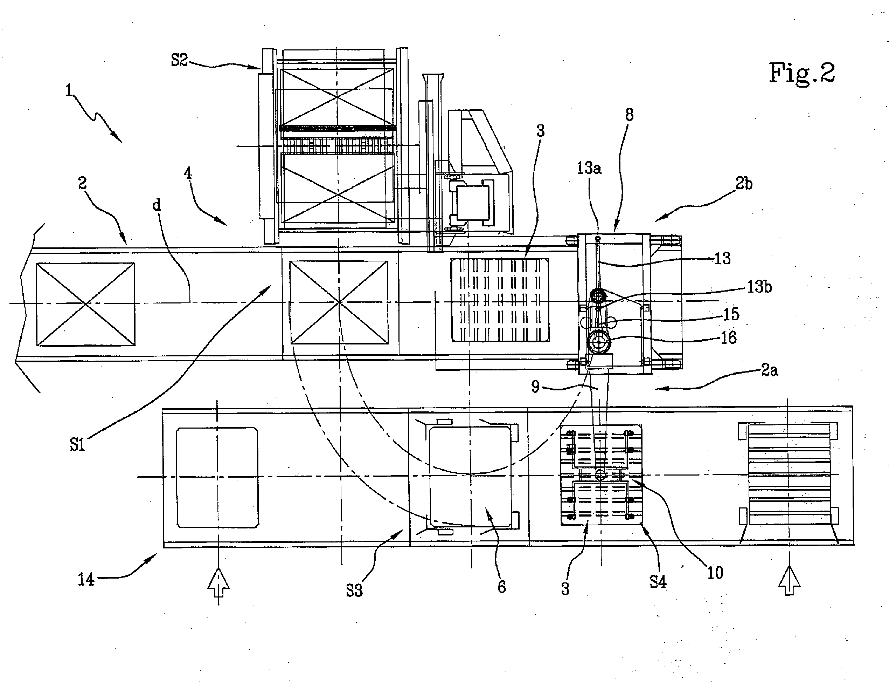

The grippers 12 hook up the top pallet 3 and pick it up. This situation is illustrated in figure 2.

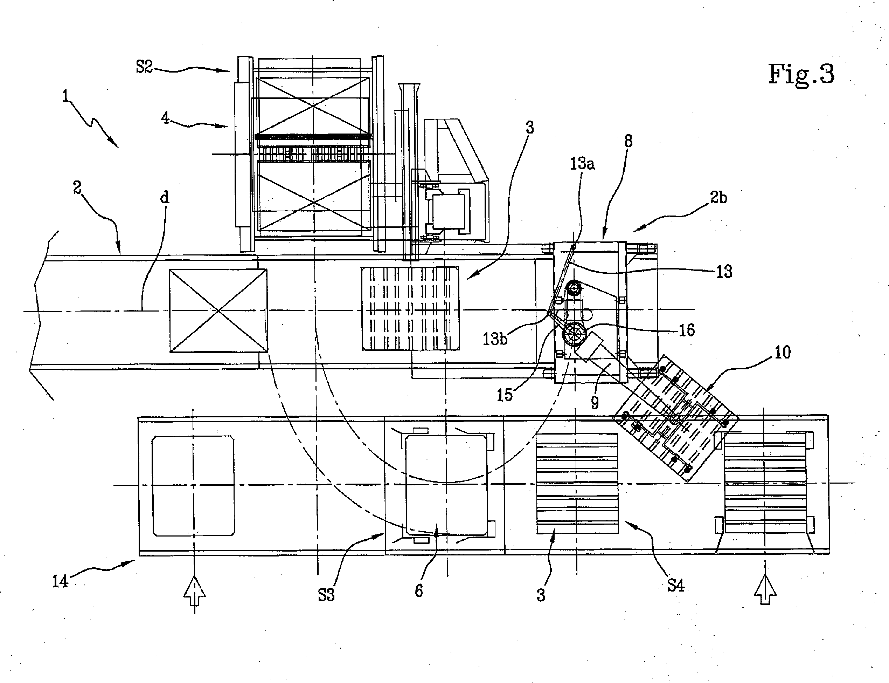

Subsequently, the carriage 8 is made to slide along the conveyor belt 2 until it reaches the first configuration again. Simultaneously, the first arm 9 is made to rotate so that the gripping organ 10 is positioned at the predisposition station s5 of pallets 3. The rotation of the first arm 9 takes place by setting the slider-crank system in motion, consisting of the second arm 13 and the third arm 15, as illustrated in figure 3.

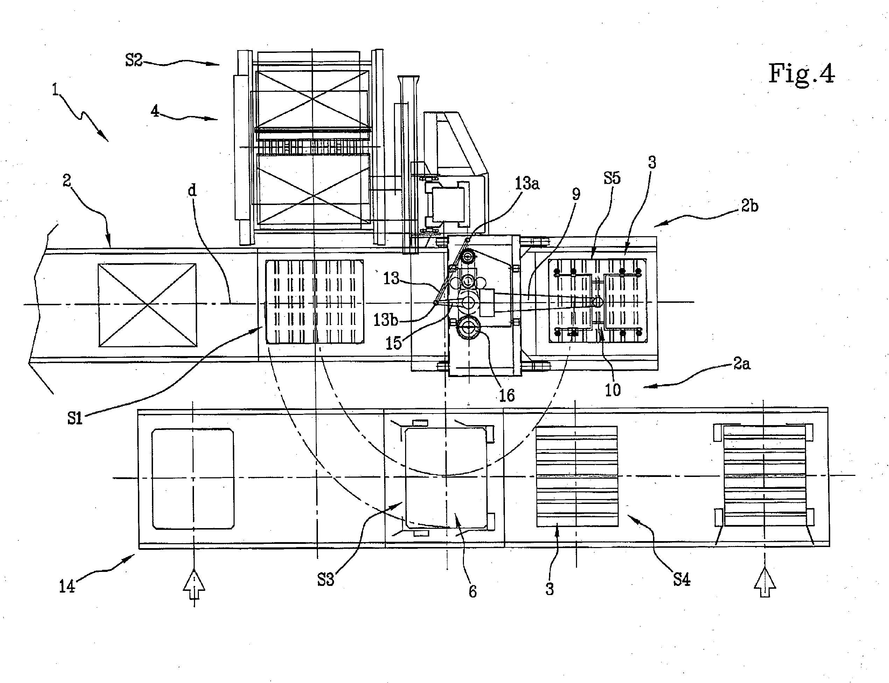

In total, the first arm 9 performs a rotation of approximately 90° at the end of which it is substantially parallel to the pre-established direction d, as can be seen in figure 4.

The height of the gripping organ 10 is regulated at the same time as the rotation of the slider-crank system or once it reaches the predisposition station s5 of pallets 3. In particular, the gripping organ 10 is brought to a second pre-established height, lower than the first pre-established height, with respect to the ground or the floor on which the palletising apparatus 10 is resting. In this way, the grippers 12 can give up to the predisposition station s5 the pallet 3 that has been picked up with the interlayer pad 6. Such pallet 3 then advances on the conveyor belt 2 until it reaches the palletising station s1.

In the meantime, another pallet 3 is prepared at the predisposition station of pallets 3, following the steps just described above.

At this point, the pallet 3 that has reached the palletising station s1 is ready to be loaded with the layers. The system gripping head on the interlayer pad 6 rests one or more layers of parcels onto the pallet 3.

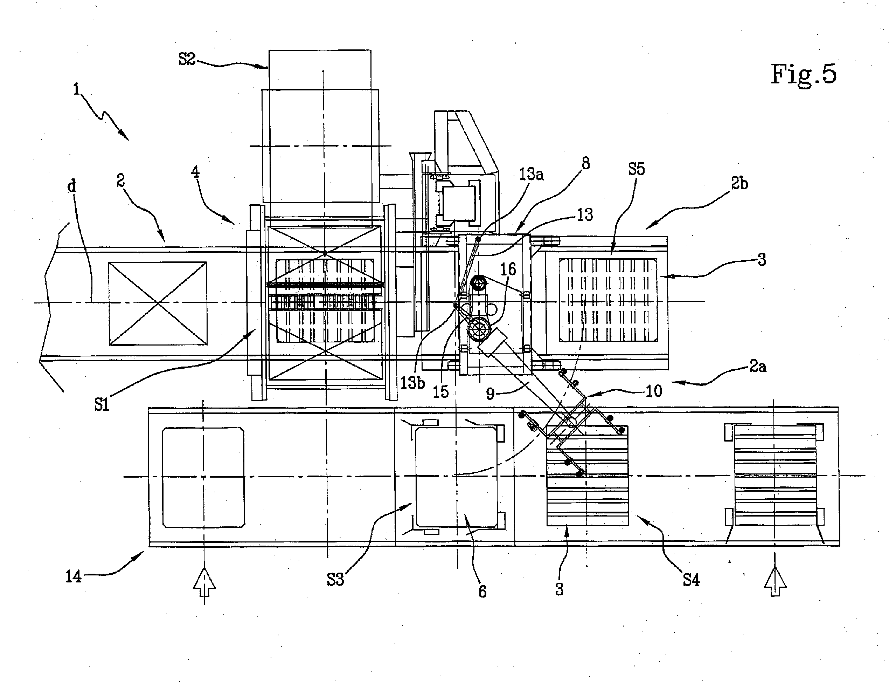

By keeping the carriage 8 in the first configuration, the first arm 9 is made to turn so that the gripping organ 10 is positioned at the accumulation station s3 of interlayer pads 6. Simultaneously or at the end of the rotation, the gripping organ 10 is brought back to the first pre-established height, which is set automatically according to the height of the pile of interlayer pads 6. The rotation of the first arm 9 takes place by setting the slider-crank system in motion, comprising the second arm 13 and the third arm 15, as illustrated in figure 5.

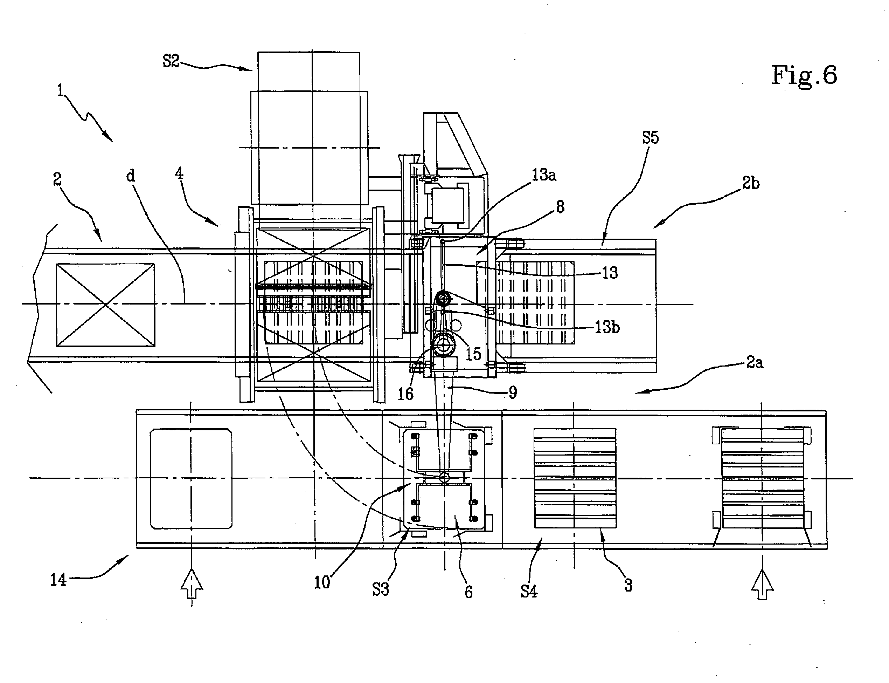

In total, the first arm 9 performs a rotation of approximately 90° at the end of which the slider-crank system is brought back into the bottom dead centre condition, as shown in figure 6.

This is a rotation of approximately 90° performed in the opposite direction to the rotation that brought the gripping organ 10 onto the predisposition station s5 of pallets 3. In this way, the gripping organ 10 is only moved onto the side 2a of the conveyor belt 2 on which the accumulation station s3 of interlayer pads 6 and the accumulation station s4 of pallets 3 are arranged. In other words, the gripping organ 10 never passes onto the other side 2b of the conveyor belt 2.

At this point, the top interlayer pad 6 is attracted by the suction cups 11 and picked up.

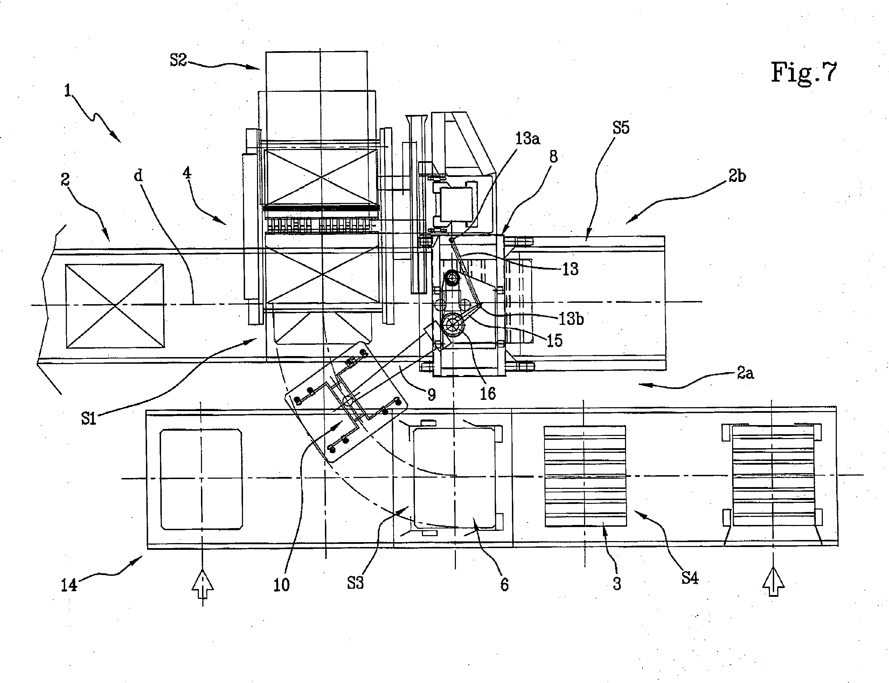

By keeping the carriage 8 in the first configuration, the first arm 9 is set in rotation so that the gripping organ 10 is positioned at the palletising station s1. The rotation of the first arm 9 is always obtained through the slider-crank system, as illustrated in figure 7.

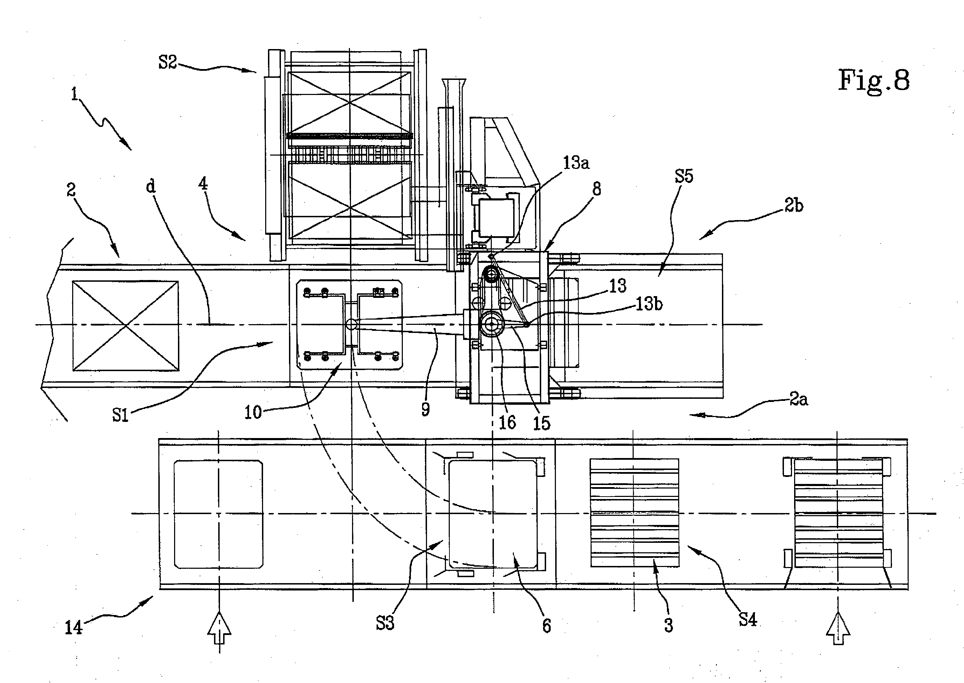

In total, the first arm 9 performs a rotation of approximately 90° at the end of which it is substantially parallel to the pre-established direction d, as can be seen in figure 8.

Once at the palletising station s1 or simultaneously during the rotation, the gripping organ 10 is brought to a third pre-established height with respect to the ground or the floor. The third pre-established height is set automatically according to the height of the layers already rested on the pallet 3 during the loading step.

At this point, the interlayer pad 6 picked up is given up by the suction cups 11 and rested on the last layer deposited on the pallet 3.

For example, an interlayer pad 6 is inserted every five or six layers of parcels.

By keeping the carriage 8 in the first configuration, the first arm 9 is set in rotation so that the gripping organ 10 is repositioned at the accumulation station s3 of the interlayer pads 6, as shown in figure 1. Simultaneously or at the end of the rotation, the gripping organ 10 is brought to the first pre-established height, which is set automatically according to the height of the pile of interlayer pads 6.

The rotation of the first arm 9 is always obtained through the slider-crank system, as shown in figure 7. This is a rotation of approximately 90°, performed in the opposite direction with respect to the rotation that brought the gripping organ 10 onto the palletising station s1. In that way, the gripping organ 10 is only moved onto the side 2a of the conveyor belt 2 on which the accumulation station s3 of interlayer pads 6 and the accumulation station s4 of pallets 3 are arranged. In other words, the gripping organ 10 never passes onto the other side 2b of the conveyor belt 2.

Note that while one pallet 3 is predisposed with the initial interlayer pad 6, the pallet 3 that is already ready advances for the pallet change. The flow is therefore continuous, without any interruptions due to changing the pallet 3. Preferably to speed up the operation, at least two pallets 3 are predisposed with an initial interlayer pad 6.

In practice, the first arm 9 can perform the following movements:
- translation from the accumulation station s3 of interlayer pads 6 to the accumulation station s4 of pallets 3;
- first rotation of approximately 90° from the accumulation station s4 of pallets 3 to the predisposition station s5 of pallets 3;
- second rotation of approximately 90° (in the opposite direction to the first rotation) from the predisposition station s5 of pallets 3 to the accumulation station s3 of interlayer pads 6;
- third rotation of approximately 90° (same direction as the second rotation) from the accumulation station s3 of interlayer pads 6 to the palletising station s1;
- fourth rotation of approximately 90° (in the opposite direction to the third rotation) from the palletising station s1 to the accumulation station s3 of interlayer pads 6.

In the embodiment described and illustrated herein, during the first and the fourth rotation, the rotation direction of the first arm 9 is anti-clockwise, while during the second and third rotation the rotation direction is clockwise.

The characteristics of the palletising apparatus and method, according to the present invention, are clear, as are the advantages.

The adjacent location of the accumulation stations of interlayer pads and pallets and their positioning on the same side of the conveyor belt, along with the use of a sliding carriage between the first and the second position allows any pick up/loading operation of interlayer pads/pallets to be performed by simply rotating the first arm through a maximum total angle of approximately 180° between the palletising station s1, the accumulation station s3 of interlayer pads 6, the accumulation station s4 of pallets 3 and the predisposition station s5 of the pallet.

As well as substantially reducing the structural complexity, a more compact palletising apparatus is obtained with respect to solutions of the prior art.

Furthermore, the limited angular coverage of the first arm (maximum 180°) reduces flexion problems of the arm itself, making the apparatus more reliable overall.

Furthermore, the predisposition of the new pallet with the initial interlayer pad does not require any downtime of the palletising apparatus 1. In fact, while a new pallet (or two new pallets) is predisposed with the initial interlayer pad, the pallet that is already ready with its initial interlayer pad advances along the conveyor belt for the pallet change. The flow is therefore continuous, without any interruptions due to the pallet change.

## Claims

1. Palletising apparatus (1) comprising:
a conveyor belt (2) of pallets (3) having a development according to a pre-established direction (d);
a palletising column (4) operatively active on a palletising station (s1) located along said conveyor belt (2) to pile layers of parcels onto a pallet (3) coming from a predisposition station (s5) of the pallets (3) located upstream of the palletising station (s1) with respect to the advancement of the pallets (3) along said pre-established direction (d);
an accumulation station (s3) of interlayer pads (6);
an accumulation station (s4) of pallets (3),
movement means (8, 9, 10, 11, 12, 13) of the interlayer pads (6) and the pallets (3), **characterised in that** said movement means (8, 9, 10, 11, 12, 13) in turn comprise:
a carriage (8) being slidably mobile on the conveyor belt (2) between a first configuration wherein it is behind the palletising station (s1) and is alongside the accumulation station (s3) of the interlayer pads (6), and a second configuration wherein it is in correspondence with the predisposition station (s5) of the pallets (3) and is alongside the accumulation station (s4) of the pallets (3), said accumulation station (s3) of the interlayer pads (6) and said accumulation station (s4) of the pallets (3) being arranged on the same side (2a) of the conveyor belt (2) and being adjacent to each other;
a first arm (9) integral with the carriage (8) and rotatably assembled on the latter;
a gripping organ (10) of the interlayer pads (6) and the pallets (3) supported by the first arm (9), said first arm (9) sweeping through a maximum total angle of about 180° when turning between the palletising station (s1), the accumulation station (s3) of the interlayer pads (6), the accumulation station (s4) of the pallets (3) and the predisposition station (s5) of the pallets (3).

2. Palletising apparatus (1) according to claim 1, wherein said gripping organ (10) comprises one or more suction cups (11) adapted to adhere to the interlayer pads (6) and one or more grippers (12) adapted to hook onto the pallets (3).

3. Palletising apparatus (1) according to claim 1 or 2, wherein said movement means (8, 9, 10, 11, 12, 13) of the interlayer pads (6) and the pallets (3) further comprise a second arm (13) having a first fixed end (13a) hinged to the carriage (8) and a second end (13b) connected to said first arm (9) through a third arm (15) so that said second arm (9) and said third arm (13) form a slider-crank system.

4. Palletising apparatus (1) according to any one of the preceding claims, wherein said palletising column (4) comprises a gripping head adapted to pick up the layers of parcels from a feeding station (s2) and to deposit them on the pallet (3) positioned in said palletising station (s1).

5. Palletising method comprising the steps of:
loading one or more layers of parcels onto a pallet (3) positioned in a palletising station (s1) located along a conveyor belt (2) developing along a pre-established direction (d);
arranging a carriage (8) on said conveyor belt (2) in a first configuration wherein said carriage (8) is upstream of and behind said palletising station (s1) and is positioned alongside an accumulation station (s3) of interlayer pads (6) external to the conveyor belt (2), on said carriage (8) a first arm (9) being integrally assembled, having a gripping organ (10) of interlayer pads (6) and pallets (3);
arranging said first arm (9) so that the gripping organ (10) is positioned in correspondence with the accumulation station (s3) of the interlayer pads (6);
picking up an interlayer pad (6) from the accumulation station (s3) of the interlayer pads (6);
keeping the carriage (8) in the first configuration, turning said first arm (9) until the gripping organ (10) is in correspondence with the palletising station (s1);
resting the picked-up interlayer pad (6) on the last layer of parcels piled onto the pallet (3);
preparing at least one new pallet (3) before starting to load the layers of parcels, said step of preparing the new pallet (3) comprising the sub-steps of:
bringing said carriage (8) into the first configuration;
arranging said first arm (9) so that the gripping organ (10) is positioned in correspondence with the accumulation station (s3) of the interlayer pads (6);
picking up an interlayer pad (6) from the accumulation station (s3) of the interlayer pads (6);
making the carriage (8) slide along the conveyor belt (2) until it reaches a second configuration wherein said carriage (8) is in correspondence with a predisposition station (s5) of pallets (3) situated upstream of the palletising station (s1) with respect to the advancement of the pallets (3) along said pre-established direction (d) and is alongside an accumulation station (s4) of pallets (3), said accumulation station (s4) of pallets (3) and said accumulation station (s3) of interlayer pads (6) being arranged on the same side (2a) of the conveyor belt (2) and being adjacent to each other;
resting the picked-up interlayer pad (6) onto the new pallet (3) positioned at the top of the accumulation station (s4) of the pallets (3);
picking up the new pallet (3) with the interlayer pad (6) resting thereon;
making the carriage (8) slide along the conveyor belt (2) until the first configuration is reached again and at the same time turning the first arm (9) so that the gripping organ (10) is positioned in correspondence with the predisposition station (s5) of the pallets (3);
transferring the new pallet (3) with the interlayer pad (6) resting thereon to the predisposition station (s5) of the pallets (3);
making the new pallet (3) with the interlayer pad (6) resting thereon advance along said conveyor belt (2) up to the palletising station (s1).

6. Method according to claim 5, wherein said first arm (9) performs a rotation of about 90° when bringing the gripping organ (10) from the accumulation station (s3) of the interlayer pads (6) to the palletising station (s1).

7. Palletising method according to claim 5 or 6, wherein said first arm (9) performs a rotation of about 90° when bringing the gripping organ (10) from the accumulation station (s4) of the pallets (3) to the predisposition station (s5) of the pallets (3).

8. Palletising method according to claim 5 to 7, wherein during the sliding of the carriage (8) between the first and the second configuration said first arm (9) does not undergo any rotation, therefore when the carriage (8) reaches the second configuration said gripping organ (10) is located in correspondence with the accumulation station (s4) of the pallets (3).

9. Palletising method according to claims 5 to 8, further comprising a plurality of steps for adjusting the height of the gripping organ (10) in order to adapt to the height of the interlayer pad (6) or of the pallet (3) to be picked up and in order to adapt to the height of the pallet (3) or of the layer on which the picked-up load is to be rested.

10. Palletising method according to claims 5 to 9, further comprising a step of storing a plurality of interlayer pads (6) in said accumulation station (s3) of the interlayer pads (6) in order to form a pile of interlayer pads (6).

11. Palletising method according to claims 5 to 10, further comprising a step of storing a plurality of pallets (3) in said accumulation station (s3) of the pallets (3) in order to form a pile of pallets (3).

## Patentansprüche

1. Vorrichtung zum Palettieren (1), umfassend:
ein Förderband (2) für Paletten (3), aufweisend eine Entwicklung gemäß einer vorgegebenen Richtung (d);
eine Palettiersäule (4), betriebswirksam aktiv an einer Palettierstation (s1),
befindlich entlang des Förderbands (2), um Schichten von Paketen auf einer Palette (3) aufzustapeln, eingehend von einer Vorbereitungsstation (s5) der Paletten (3), befindlich vor der Palettierstation (s1) zum Vorschub der Paletten (3) entlang der vorgegebenen Richtung (d);
eine Sammelstation (s3) von Zwischenfolien (6);
eine Sammelstation (s4) von Paletten (3);
Bewegungsmittel (8, 9, 10, 11, 12, 13) der Zwischenfolien (6) und der Paletten (3), **dadurch gekennzeichnet, dass** die Bewegungsmittel (8, 9, 10, 11, 12, 13) wiederum umfassen:
einen Wagen (8), der verschiebbar auf dem Förderband (2) bewegbar ist, zwischen einer ersten Konfiguration, in der er sich hinter der Palettierstation (s1) und seitlich der Sammelstation (s3) der Zwischenfolien (6) befindet, und einer zweiten Konfiguration, in der er sich an der Vorbereitungsstation (s5) der Paletten (3) und seitlich der Sammelstation (s4) der Paletten (3) befindet, wobei die Sammelstation (s3) der Zwischenfolien (6) und die Sammelstation (s4) der Paletten (3) an derselben Seite (2a) des Förderbands (2) angeordnet sind und aneinander grenzen;
einen ersten Arm (9), fest verbunden mit dem Wagen (8) und drehbar montiert an diesem;
ein Greiforgan (10) der Zwischenfolien (6) und der Paletten (3), getragen durch den ersten Arm (9), wobei der erste Arm (9) über einen maximalen Gesamtwinkel von zirka 180° schwingt, wenn er sich zwischen der Palettierstation (s1), der Sammelstation (s3) der Zwischenfolien (6), der Sammelstation (s4) der Paletten (3) und der Vorbereitungsstation (s5) der Paletten (3) dreht.

2. Vorrichtung zum Palettieren (1) nach Anspruch 1, wobei das Greiforgan (10) eine oder mehrere Saugnäpfe (11) umfasst, ausgelegt, um an die Zwischenfolien (6) anzuhaften, und einen oder mehrere Greifer (12), ausgelegt, um an die Paletten (3) angehakt zu werden.

3. Vorrichtung zum Palettieren (1) nach Anspruch 1 oder 2, wobei die Bewegungsmittel (8, 9, 10, 11, 12, 13) der Zwischenfolien (6) und der Paletten (3) zudem einen zweiten Arm (13) umfassen, aufweisend ein erstes fixes Ende (13a), mittels einer Gelenkverbindung am Wagen (8) befestigt, und ein zweites Ende (13b), verbunden mit dem ersten Arm (9) über einen dritten Arm (15), sodass der zweite Arm (9) und der dritte Arm (13) ein Schubkurbelsystem bilden.

4. Vorrichtung zum Palettieren (1) nach einem der vorhergehenden Ansprüche, wobei die Palettiersäule (4) einen Greiferkopf umfasst, ausgelegt, um die Paketschichten von einer Zuführstation (s2) aufzunehmen und auf der Palette (3) abzulegen, die in der Palettierstation (s1) positioniert ist.

5. Verfahren zum Palettieren, umfassend folgende Schritte:
Laden einer oder mehrere Paketschichten auf eine Palette (3), die in einer Palettierstation (s1) positioniert ist, befindlich entlang eines Förderbands (2), sich entwickelnd entlang einer vorgegebenen Richtung (d);
Anordnen eines Wagens (8) auf dem Förderband (2) in einer ersten Konfiguration, wobei sich der Wagen (8) vor und hinter der Palettierstation (s1) befindet und entlang einer Sammelstation (s3) für Zwischenfolien (6) positioniert ist, die außerhalb des Förderbands (2) angeordnet ist, wobei am Wagen (8) ein erster Arm (9) fest verbunden montiert ist, aufweisend ein Greiforgan (10) für Zwischenfolien (6) und Paletten (3);
Anordnen des ersten Arms (9), sodass das Greiforgan (10) an der Sammelstation (s3) der Zwischenfolien (6) positioniert ist;
Aufnehmen einer Zwischenfolie (6) von der Sammelstation (s3) der Zwischenfolien (6);
Beibehalten des Wagens (8) in der ersten Konfiguration, wobei der erste Arm (9) gedreht wird, bis sich das Greiforgan (10) an der Palettierstation (s1) befindet;
Auflegen der aufgenommenen Zwischenfolie (6) auf die letzte auf der Palette (3) aufgestapelte Paketschicht;
Vorbereiten mindestens einer neuen Palette (3), bevor die Paketschichten geladen werden, wobei der Schritt zum Vorbereiten der neuen Palette (3) folgende Unterschritte umfasst:
Fahren des Wagens (8) in die erste Konfiguration;
Anordnen des ersten Arms (9), sodass das Greiforgan (10) an der Sammelstation (s3) der Zwischenfolien (6) positioniert ist;
Aufnehmen einer Zwischenfolie (6) von der Sammelstation (s3) der Zwischenfolien (6);
Verschieben des Wagens (8) entlang des Förderbands (2), bis dieser eine zweite Konfiguration erreicht, in der sich der Wagen (8) an einer Vorbereitungsstation (s5) für Paletten (3) befindet, befindlich vor der Palettierstation (s1) zum Vorschub der Paletten (3) entlang der vorgegebenen Richtung (d) und seitlich einer Sammelstation (s4) für Paletten (3), wobei die Sammelstation (s4) für Paletten (3) und die Sammelstation (s3) für Zwischenfolien (6) auf derselben Seite (2a) des Förderbands (2) angeordnet sind und aneinander grenzen;
Auflegen der aufgenommenen Zwischenfolie (6) auf eine neue Palette (3),
positioniert an der Oberseite der Sammelstation (s4) der Paletten (3);
Aufnehmen der neuen Palette (3) mit der darauf aufliegenden Zwischenfolie (6);
Verschieben des Wagens (8) entlang des Förderbands (2), bis erneut die erste Konfiguration erreicht ist, und gleichzeitiges Drehen des ersten Arms (9), sodass das Greiforgan (10) an der Vorbereitungsstation (s5) der Paletten (3) positioniert wird;
Transferieren der neuen Palette (3) mit der darauf aufliegenden Zwischenfolie (6) zur Vorbereitungsstation (s5) der Paletten (3);
Vorschieben der neuen Palette (3) mit der darauf aufliegenden Zwischenfolie (6) entlang des Förderbands (2) bis zur Palettierstation (s1).

6. Verfahren nach Anspruch 5, wobei der erste Arm (9) eine Drehung um zirka 90° ausführt, wenn das Greiforgan (10) von der Sammelstation (s3) der Zwischenfolien (6) zur Palettierstation (s1) gebracht wird.

7. Verfahren zum Palettieren nach Anspruch 5 oder 6, wobei der erste Arm (9) eine Drehung um zirka 90° ausführt, wenn das Greiforgan (10) von der Sammelstation (s4) der Paletten (3) zur Vorbereitungsstation (s5) der Paletten (3) gebracht wird.

8. Verfahren zum Palettieren nach Anspruch 5 bis 7, wobei der erste Arm (9) während des Verschiebens des Wagens (8) zwischen der ersten und der zweiten Konfiguration keine Drehung ausführt und das Greiforgan (10) daher an der Sammelstation (s4) der Paletten (3) befindlich ist, wenn der Wagen (8) die zweite Konfiguration erreicht.

9. Verfahren zum Palettieren nach Anspruch 5 bis 8, zudem umfassend eine Vielzahl an Schritten zum Einstellen der Höhe des Greiforgans (10), um der Höhe der aufzunehmenden Zwischenfolie (6) oder Palette (3) angepasst zu werden, und um der Höhe der Palette (3) oder der Schicht, auf der die aufgenommene Last abgelegt wird, angepasst zu werden.

10. Verfahren zum Palettieren nach Anspruch 5 bis 9, zudem umfassend einen Schritt zum Lagern einer Vielzahl von Zwischenfolien (6) in der Sammelstation (s3) der Zwischenfolien (6), um einen Stapel an Zwischenfolien (6) zu bilden.

11. Verfahren zum Palettieren nach Anspruch 5 bis 10, zudem umfassend einen Schritt zum Lagern einer Vielzahl von Paletten (3) in der Sammelstation (s3) der Paletten (3), um einen Stapel an Paletten (3) zu bilden.

## Revendications

1. Dispositif de palettisation (1) comprenant :
un tapis transporteur (2) de palettes (3) évoluant dans une direction prédéterminée (d) ;
une colonne de palettisation (4) opérationnellement active à un poste de palettisation (s1) situé le long dudit tapis transporteur (2) pour empiler des couches de paquets sur une palette (3) provenant d'un poste de préparation (s5) des palettes (3) situé en amont du poste de palettisation (s1) par rapport à la progression des palettes (3) le long de ladite direction prédéterminée (d) ;
un poste d'accumulation (s3) de séparateurs (6) ;
un poste d'accumulation (s4) de palettes (3) ;
des moyens de déplacement (8, 9, 10, 11, 12, 13) des séparateurs (6) et des palettes (3), **caractérisé en ce que** lesdits moyens de déplacement (8, 9, 10, 11, 12, 13) comprennent, à leur tour, :
un chariot (8) coulissant sur le tapis transporteur (2) entre une première configuration dans laquelle il se trouve derrière le poste de palettisation (s1) et le long du poste d'accumulation (s3) des séparateurs (6), et une seconde configuration dans laquelle il se situe au niveau du poste de préparation (s5) des palettes (3) et le long du poste d'accumulation (s4) des palettes (3), ledit poste d'accumulation (s3) des séparateurs (6) et ledit poste d'accumulation (s4) des palettes (3) se situant du même côté (2a) du tapis transporteur (2) et l'un à côté de l'autre ;
un premier bras (9) solidaire du chariot (8) et monté de façon rotative sur ce dernier ;
un organe de préhension (10) des séparateurs (6) et des palettes (3) soutenu par le premier bras (9), ledit premier bras (9) parcourant un angle total maximum d'environ 180° en pivotant entre le poste de palettisation (s1), le poste d'accumulation (s3) des séparateurs (6), le poste d'accumulation (s4) des palettes (3) et le poste de préparation (s5) des palettes (3).

2. Dispositif de palettisation (1) selon la revendication 1, dans lequel ledit organe de préhension (10) comporte une ou plusieurs ventouses (11) pouvant adhérer aux séparateurs (6) et un ou plusieurs préhenseurs (12) pouvant s'accrocher aux palettes (3).

3. Dispositif de palettisation (1) selon les revendications 1 ou 2, dans lequel lesdits moyens de déplacement (8, 9, 10, 11, 12, 13) des séparateurs (6) et des palettes (3) comprennent également un second bras (13) avec une première extrémité fixe (13a) montée articulée sur le chariot (8) et une seconde extrémité (13b) raccordée audit premier bras (9) par un troisième bras (15), de sorte que ledit second bras (9) et ledit troisième bras (13) forment un système bielle-manivelle.

4. Dispositif de palettisation (1) selon l'une quelconque des revendications précédentes, dans lequel ladite colonne de palettisation (4) comprend une tête de préhension pouvant prélever les couches de paquets à un poste d'alimentation (s2) et les déposer sur la palette (3) se trouvant audit poste de palettisation (s1).

5. Procédé de palettisation comprenant les étapes suivantes :
charger une ou plusieurs couches de paquets sur une palette (3) se trouvant à un poste de palettisation (s1) situé le long d'un tapis transporteur (2) évoluant dans une direction prédéterminée (d) ;
disposer un chariot (8) sur ledit tapis transporteur (2) dans une première configuration dans laquelle ledit chariot (8) est en amont dudit et derrière ledit poste de palettisation (s1) et le long d'un poste d'accumulation (s3) de séparateurs (6) externe au tapis transporteur (2), sur ledit chariot (8) un premier bras (9) étant assemblé de façon solidaire, ayant un organe de préhension (10) de séparateurs (6) et de palettes (3) ;
disposer ledit premier bras (9) pour que l'organe de préhension (10) se positionne au niveau du poste d'accumulation (s3) des séparateurs (6) ;
prélever un séparateur (6) au poste d'accumulation (s3) des séparateurs (6) ;
garder le chariot (8) dans la première configuration, tourner ledit premier bras (9) jusqu'à ce que l'organe de préhension (10) se positionne au niveau du poste de palettisation (s1) ;
déposer le séparateur prélevé (6) sur la dernière couche de paquets empilés sur la palette (3) ;
préparer au moins une nouvelle palette (3) avant de commencer à charger les couches de paquets, ladite étape de préparation de la nouvelle palette (3) comprenant les sous-étapes suivantes :
amener ledit chariot (8) dans la première configuration ;
disposer ledit premier bras (9) pour que l'organe de préhension (10) se positionne au niveau du poste d'accumulation (s3) des séparateurs (6) ;
prélever un séparateur (6) au poste d'accumulation (s3) des séparateurs (6) ;
faire coulisser le chariot (8) le long du tapis transporteur (2) jusqu'à ce qu'il se mette dans une seconde configuration dans laquelle ledit chariot (8) se trouve au niveau d'un poste de préparation (s5) des palettes (3) situé en amont du poste de palettisation (s1) par rapport à la progression des palettes (3) le long de ladite direction prédéterminée (d) et se trouve le long d'un poste d'accumulation (s4) des palettes (3), ledit poste d'accumulation (s4) de palettes (3) et ledit poste d'accumulation (s3) de séparateurs (6) se situant du même côté (2a) du tapis transporteur (2) et l'un à côté de l'autre ;
déposer le séparateur prélevé (6) sur la nouvelle palette (3) positionnée dans le haut du poste d'accumulation (s4) des palettes (3) ;
prélever la nouvelle palette (3) avec le séparateur (6) déposé dessus ;
faire coulisser le chariot (8) le long du tapis transporteur (2) jusqu'à atteindre de nouveau la première configuration, et en même temps,
tourner le premier bras (9) pour que l'organe de préhension (10) se positionne au niveau du poste de préparation (s5) des palettes (3) ;
transférer la nouvelle palette (3) avec le séparateur (6) déposé dessus vers le poste de préparation (s5) des palettes (3) ;
faire avancer la nouvelle palette (3) avec le séparateur (6) déposé dessus le long dudit tapis transporteur (2) vers le poste de palettisation (s1).

6. Procédé selon la revendication 5, dans lequel ledit premier bras (9) réalise une rotation d'environ 90° quand l'organe de préhension (10) passe du poste d'accumulation (s3) des séparateurs (6) au poste de palettisation (s1).

7. Procédé de palettisation selon les revendications 5 ou 6, dans lequel ledit premier bras (9) réalise une rotation d'environ 90° quand l'organe de préhension (10) passe du poste d'accumulation (s4) des palettes (3) au poste de préparation (s5) des palettes (3).

8. Procédé de palettisation selon les revendications 5 à 7, dans lequel, pendant le coulissement du chariot (8) entre la première configuration et la seconde configuration, ledit premier bras (9) n'effectue aucune rotation. Par conséquent, quand le chariot (8) se met dans la seconde configuration, ledit organe de préhension (10) se situe au niveau du poste d'accumulation (s4) des palettes (3).

9. Procédé de palettisation selon les revendications 5 à 8, comprenant également une pluralité d'étapes pour ajuster la hauteur de l'organe de préhension (10), de sorte à l'adapter à la hauteur du séparateur (6) ou à celle de la palette (3) à prélever et de sorte à l'adapter à la hauteur de la palette (3) ou à celle de la couche sur laquelle la charge prélevée doit être déposée.

10. Procédé de palettisation selon les revendications 5 à 9, comprenant aussi une étape de stockage d'une pluralité de séparateurs (6) dans ledit poste d'accumulation (s3) des séparateurs (6) pour former une pile de séparateurs (6).

11. Procédé de palettisation selon les revendications 5 à 10, comprenant aussi une étape de stockage d'une pluralité de palettes (3) dans ledit poste d'accumulation (s3) des palettes (3) pour former une pile de palettes (3).
